# EUROPEAN PATENT APPLICATION

(11) **EP 1 468 872 A1**
(43) Date of publication of application: **20.10.2004**
(21) Application number: 04101501.7
(22) Date of filing: 13.04.2004
(51) Int. Cl.: B60N 3/10

(54) **Drinks holder for a vehicle, and in particular for a motor vehicle**

(30) Priority: 14.04.2003 IT TO20030288
(71) Applicant: FIAT AUTO S.p.A., 10135 Torino (IT)
(72) Inventor: Parlato, Antonio, 10135 Torino (IT); Bertolo, Stefano, 10135 Torino (IT)
(74) Representative: Jorio, Paolo, Dr. Ing.

(57) **Abstract**

A drinks holder (1) for a motor vehicle comprises an attachment plate (2) which can be connected to a portion of the vehicle; a support body (3) provided with a seat (4) for partial accommodation of a drinking vessel (5); a lever (9) which supports the support body (3) in a hinged manner, and in turn is hinged on the attachment plate (2), in order to rotate around a substantially horizontal axis of articulation (12); and a positioning device (7) in order to permit displacement of the support body (3) between a horizontal operative position for retention of the drinking vessel (5), and a stable rest position, wherein the support body (3) extends in a position which is substantially vertical and faces the attachment plate (2), and is retained by a retention unit (8) which can be activated/deactivated by manual thrust.

## Description

The present invention relates to a drinks holder for a vehicle, and in particular for a motor vehicle.

In order to support drinking vessels inside vehicles, it is known to use drinks holders which can be extracted, i.e. which are mobile on a substantially horizontal plane, between an extracted operative position for support of the drinking vessel, and a withdrawn rest position, in which the drinks holder extends inside the body of the vehicle with which the drinks holder is associated.

Although they are used, the known drinks holders of the above-described type suffer from the main disadvantage of being particularly cumbersome.

The above-described problem is derived substantially from the fact that the known drinks holders require an accommodation seat with substantial dimensions to support them inside the body. In many applications, it is not possible to provide this accommodation seat for various reasons, for example owing to the presence of other devices which are accommodated in the body, with which the drinks holders would interfere whilst they were being displaced, or simply because of the fact that the support body of the drinks holder has very limited thicknesses.

For the same reasons as those previously described, the known drinks holders cannot be positioned at all points of the car, and in particular they cannot be connected to panels or solid bodies for closure or finishing.

The object of the present invention is to provide a drinks holder for a vehicle, which makes it possible to solve the above-described problems simply and economically, and in particular a drinks holder which has extremely limited dimensions and can be connected to any element inside the vehicle.

According to the present invention, a drinks holder for a vehicle, and in particular a motor vehicle, is provided, comprising a support plate body which is provided with a seat for partial accommodation of a drinking vessel, and is characterised in that it comprises an attachment plate which can be connected to a portion of the vehicle; lever transmission means which are hinged on the said attachment plate in order to rotate around an axis of articulation which is substantially horizontal and supports connected to it the said support plate body; positioning means in order to permit displacement of the said plate body between a horizontal operative position for support of the drinking vessel, and a stable rest position, in which the said plate body extends on a plane which is at right-angles to the said axis of articulation; and retention means in order to retain the plate body in the said operative and rest positions.

Preferably, in the drinks holder previously defined, the said plate body extends in a position which faces and is adjacent to the said attachment plate, when the body is disposed in the said rest position.

Advantageously, the said lever transmission means comprise a single lever, and the positioning and retention means comprise means for relative mobility which are interposed between the said plate body and the said lever, in order to permit rotation of the plate body relative to the said lever, and resilient thrust means being associated with the said means for relative mobility, in order to displace the said plate body towards the said horizontal position for support of the drinking vessel.

Further resilient means are interposed between the said lever and the said attachment plate, in order to displace the said plate body towards the said operative position.

The invention will now be described with reference to the attached figures, which illustrate a non-limiting embodiment of it, in which:
figure 1 is a perspective view of a preferred embodiment of the drinks holder according to the present invention, illustrated in a rest position; and
figures 2 and 3 are figures similar to figure 1, and illustrate, with parts removed for the sake of clarity, the drinks holder in the figure respectively in an intermediate position and in an operative position.

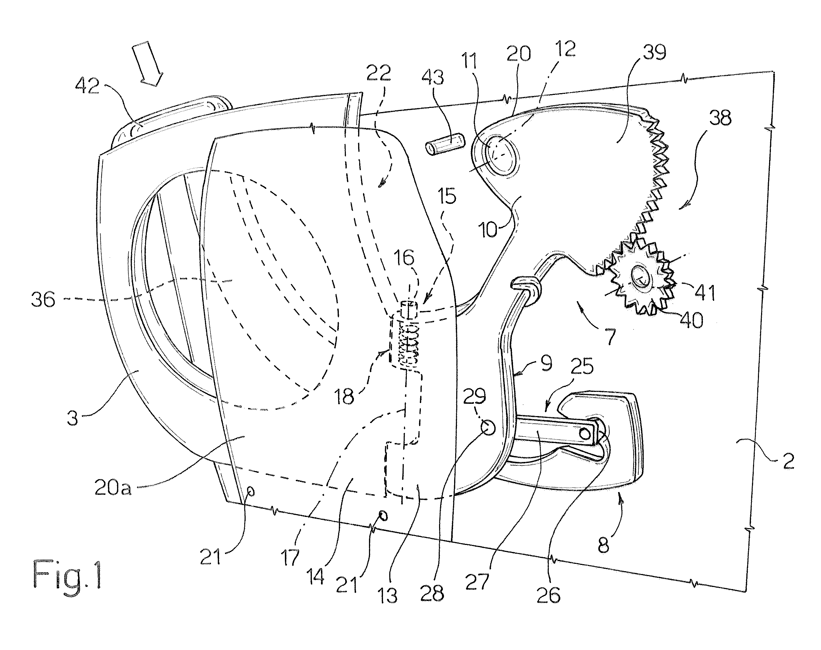

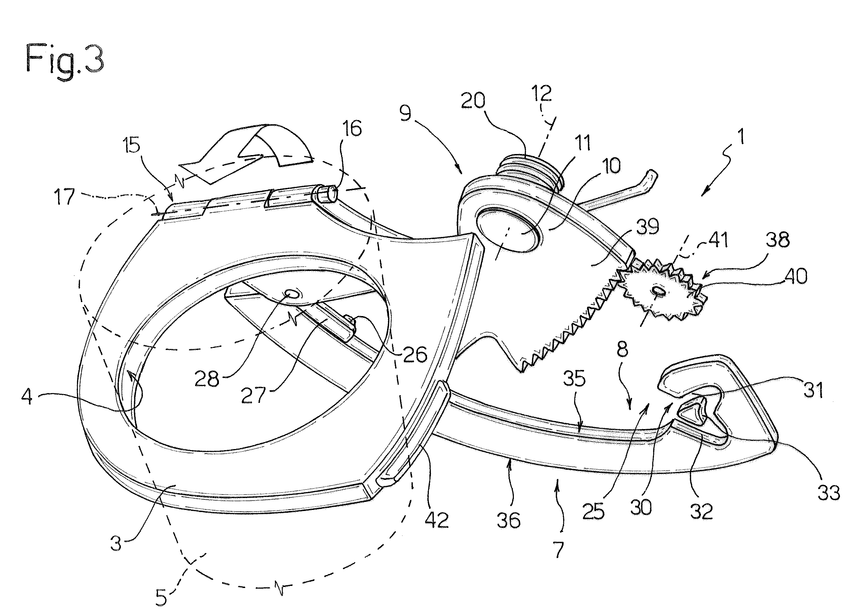

In the attached figures, 1 indicates a drinks holder for a vehicle in general, and for a motor vehicle in particular. The drinks holder 1 comprises an attachment plate 2 (figure 1) which can be connected to a portion (not illustrated) of the vehicle (not illustrated), and a support plate body 3 which is provided with a through aperture 4, which constitutes a seat for partial accommodation of a drinking vessel 5 (figure 3). The plate body 3 is connected to the attachment plate 2 by means of a positioning device 7 in order to permit displacement of the plate body 3 itself between a horizontal operative position for support of the drinking vessel, illustrated in figure 3, and a stable rest position illustrated in figure 1, in which the body 3 extends in a position facing and adjacent to the attachment plate 2, and lies on a substantially vertical plane. The plate body 3 is retained in the said operative and rest positions by a retention unit, which is indicated as 8, and is described in greater detail hereinafter.

The positioning device 7 comprises a lever 9, an end portion 10 of which is hinged on the attachment plate 2 by means of a pin 11, in order to rotate around an axis of articulation 12 which is substantially horizontal and at right-angles to the attachment plate 2 and to the said position plane, and an opposite end portion 13 of which supports hinged on it a perimeter portion 14 of the plate body 3. In particular, the plate body 3 is hinged on the end portion 13 by means of a hinge 15 with a hinge pin 16, which has an axis 17 at right-angles to the axis 12, and around which there is wound, coaxially relative to the axis 17, a torsion spring 18, partially illustrated, which also constitutes part of the retention unit 8, and can thrust the plate body 3 towards its operative position.

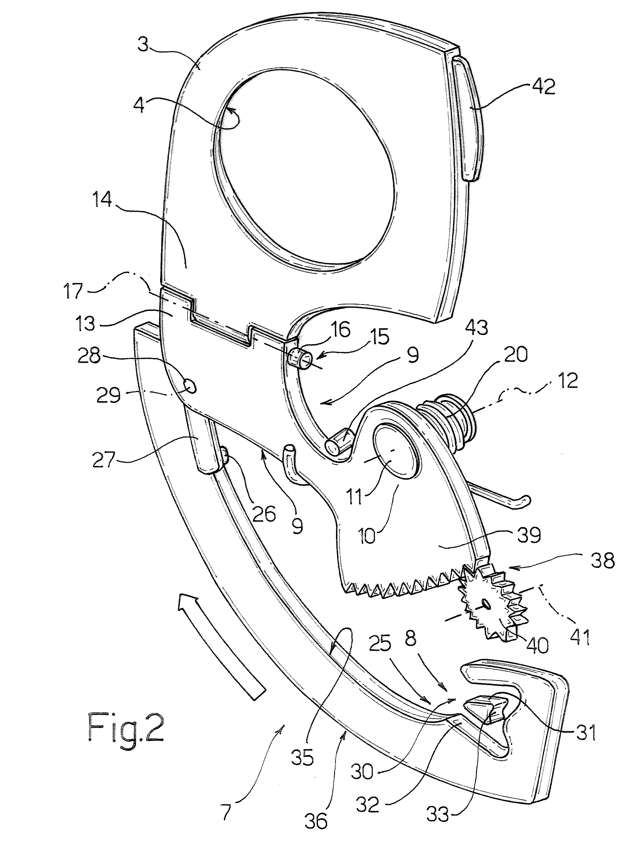

As illustrated, in figures 2 and 3 in particular, the positioning device 7 also comprises a further torsion spring 20, which is wound around the articulation pin 11 coaxially relative to the axis 12, and is interposed between the lever 9 and the attachment plate 2, in order to displace the lever 9, and consequently the plate body 3, towards the operative position.

During its displacement from and to the rest position, the plate body 3 co-operates in a sliding manner with a fixed stop cam, which in this specific case is defined by a stop plate 20a (figure 1) which is connected integrally to the attachment plate 2 by means of screws or rivets 21, and extends in a position which faces the attachment plate 2 itself, in order to define a cavity or seat 22 for accommodation of at least part of the support plate body 3 and of the portion 13 of the lever 9, at least when the support plate body 3 is disposed in its rest position.

Again with reference to the appended figures, the retention unit 8 which is provided in order to maintain the support plate body 3 in the said operative and rest positions comprises, in addition to the spring 18, a device 25 for coupling/release by pressure, in order to retain the plate body 3 such that it can be released, in its rest position. The device 25 is interposed between the lever 9 and the attachment plate 2, and comprises a mobile peg 26 which is connected integrally to an end of a rod 27, the opposite end of which is hinged on the lever 9, by means of a pin 28, in a position adjacent to the portion 13, in order to rotate around an axis 29 which is parallel to the axis of articulation 12. The peg 26 has dimensions such as to engage in a sliding manner in a seat which is supported by the attachment plate 2, and is defined by a groove or seat 30 in the form of an overturned "M" with an intake section 31 and an outlet section 32 which are connected to one another by a section 33 in the form of a loop. The peg 26 is loaded by a torsion spring, which cannot be seen in the attached figures, and is wound around the pin 28 in order to thrust the peg 26 itself against the inner surface of the intake section 31 and of the section 33 in the form of a loop, and against the outer surface of the outlet section 32. The outer surface of the outlet section 32 is connected to a curved lateral surface 35 of a guide body 36, which is connected integrally to the attachment plate 2, and against which the peg 26 slides during displacement of the plate body 3 between the operative and rest positions.

Again with reference to the attached figures, the drinks holder 1 finally comprises a braking or deceleration device 38, which can permit displacement of the plate body 3 between the said operative and rest positions, at a predetermined speed. Advantageously, the loading device 38 is a gear-type transmission unit, which in turn comprises a circular toothed segment 39 which is supported by the portion 10 of the lever 9, and engages with a toothed wheel 40 which is connected to the attachment plate 2, in order to rotate around an axis 41 which is parallel to the axis of articulation 12.

The functioning of the drinks holder 1 will now be described starting from the conditions illustrated in figure 1, in which the plate body 3 is disposed in its position of rest, and is thus accommodated in the cavity 22, and is kept engaged in the cavity 22 itself by the retention unit 8, the peg 26 of which engages with the section 33 in the form of a loop, and exerts an action of retention which opposes that exerted by the spring 20.

Starting from this condition, by exerting pressure with the hand on the portion 42 of the plate body 3, the peg 26 releases the section 33 in the form of a loop, and under the thrust of the corresponding spring, engages the outlet section 32. At this point, under the thrust of the spring 20, the plate body 3 is displaced progressively towards its operative position. During this displacement, the lever 9 and the toothed segment 39 rotate around the articulation pin 11, the peg 26 slides in contact with the surface 35 and is withdrawn from the groove 30, whereas the plate body 3 progressively clears the cavity 22 and slides in contact with the plate 20a, which opposes the thrust exerted by the spring 18. At the moment at which the plate body 3 is released from the constraint with the plate 20a, the spring 18 rotates the plate body 3 itself progressively around the axis 17, until it takes it into the operative position. When this position has been reached, the lever abuts an end-of-travel stop 43 which is integral with the attachment plate 2, and the drinking vessel 5 can be inserted in the through aperture 4.

At the moment when it is wished to restore the initial condition, the portion 42 is moved again manually, the support body 3 is rotated around the axis 17 in the direction which is the inverse of the previous case, until it is taken into the intermediate position illustrated in figure 2. At this point, by exerting on the plate body 3 action such as to overcome the action of the spring 20 and the resistance opposed by the deceleration device unit 38, the plate body 3 itself is reinserted in the cavity 22, in which it is retained by the peg 26, which in the meantime, after passing in the reverse direction over the surface 35, has fitted into the intake section 31, and has snapped into the section 33 in the form of a loop.

From the foregoing description it is apparent that the design characteristics of the drinks holder 1 described, and in particular the fact of having particularly small transverse dimensions, especially when it is disposed in its rest position, allow the drinks holder to be positioned in any point of the car, and to be connected to any element of the car itself, and in particular to any structural or covering panel, even when the latter does not have any apertures; in fact, the connection of the drinks holder 1 requires simple coupling of the attachment plate 2, which can be carried out by means of screws, rivets, or other equivalent connection means. The drinks holder 1 is also extremely simple from a design point of view, it is very reliable, and above all it is easy to use, since it can be extracted and returned to the initial rest condition simply by being pressed with the hand.

It is apparent from the foregoing description that modifications and variations which do not depart from the field of protection of the present invention can be made to the drinks holder 1 described.

In particular, the lever 9 could be replaced by a lever different from the one described by way of example or by a lever transmission. In addition, the retention unit 8 need not be present, and the gear transmission 38 provided, or another transmission, could be connected to an electric motor in order to rotate the corresponding plate body around the axis of articulation 12.

Finally, the torsion springs could be replaced by different resilient thrust elements.

## Claims

1. Drinks holder (1) for a vehicle, in particular a motor vehicle, comprising a support plate body (3) which is provided with a seat (4) for partial accommodation of a drinking vessel (5), and is **characterised in that** it comprises an attachment plate (2) which can be connected to a portion of the vehicle; lever transmission means (9), which are hinged on the said attachment plate (2) in order to rotate around a substantially horizontal axis (12) of articulation and support connected to them the said support plate body (3); positioning means (7) in order to permit displacement of the said plate body (3) between a horizontal operative position for support of the drinking vessel (5) and a stable rest position, in which the said plate body (3) extends on a plane which is at right-angles to the said axis (12) of articulation; and retention means (8) in order to retain the plate body (3) in the said operative and rest positions.

2. Drinks holder according to claim 1, **characterised in that**, when it is disposed in the said rest position, the said plate body (3) extends in a position adjacent to the said attachment plate (2).

3. Drinks holder according to claim 1 or claim 2, **characterised in that** the said lever transmission means comprise a single lever (9), and the said positioning (7) and retention (8) means comprise means for relative mobility (15), which are interposed between the said plate body (3) and the said lever (9), in order to permit rotation of the plate body (3) relative to the said lever (9).

4. Drinks holder according to claim 3, **characterised in that** the said means for relative mobility comprise hinge means (15) that have a hinge axis (17), which is at right-angles to the said axis (12) of articulation.

5. Drinks holder according to claim 3 or claim 4, **characterised in that** the said positioning (7) and retention (8) means additionally comprise resilient thrust means (18), which are associated with the said means for relative mobility (15), in order to displace the said plate body (3) towards the said horizontal position of support of the drinking vessel (5).

6. Drinks holder according to claim 5, **characterised in that** the said resilient means comprise a torsion spring (18), which is disposed coaxially relative to the said hinge axis (17).

7. Drinks holder according to any one of claims 3 to 6, **characterised in that** the said positioning means (7) additionally comprise further resilient means (20), which are interposed between the said lever (9) and the said attachment plate (2) in order to displace the said plate body (3) towards the said operative position.

8. Drinks holder according to claim 7, **characterised in that** the said further resilient means comprise a further torsion spring (18).

9. Drinks holder according to claim 8, **characterised in that** the said torsion spring (18) extends coaxially around the said axis (12) of articulation.

10. Drinks holder according to any one of the preceding claims, **characterised in that** the said positioning means (7) comprise cam means (20a), which are supported by the said attachment plate (2), and cooperate with the said plate body (3).

11. Drinks holder according to claim 10, **characterised in that** the said cam means comprise a stop plate (20a), which is connected integrally to the said attachment plate (2), and extends in a position facing the attachment plate (2) in order to define a seat (22) for accommodation of at least part of the said support plate body (3), at least when the support plate body (3) is disposed in the said rest position.

12. Drinks holder according to any one of the preceding claims, **characterised in that** the said retention means (8) comprise a device (25) for coupling/release by pressure, in order to retain the said plate body (3) such that it can be released, in the said rest position.

13. Drinks holder according to claim 12, **characterised in that** the said device (25) for coupling/release by pressure is interposed between the said lever transmission means (9) and the said attachment plate (2).

14. Drinks holder according to claim 13, **characterised in that** the said device (25) for coupling/release by pressure comprises a peg (26), which is mobile relative to the said lever transmission means (9), and a fixed retention seat (30), which is supported by the said attachment plate (2).

15. Drinks holder according to claim 14, **characterised in that** the said peg (26) is connected integrally to an end of a rod (27), the opposite end of which is hinged on the said lever transmission means (9), in order to rotate around an axis (29), which is parallel to the said axis of articulation (12).

16. Drinks holder according to claim 14 or claim 15, **characterised in that** the said retention means (8) additionally comprise a curved guide (35), against which the said peg (26) slides during displacement of the said plate body (3) between the said operative and rest positions.

17. Drinks holder according to any one of the preceding claims, **characterised in that** it comprises braking means (38), which can permit displacement of the said plate body (3) between the said operative and rest positions, at a predetermined speed.

18. Drinks holder according to claim 17, **characterised in that** the said braking means (38) comprise gear means (39,40).

19. Drinks holder according to claim 18, **characterised in that** the said gear means comprise a circular toothed segment (39), which is supported by the said lever transmission means (9) and a toothed wheel (40), which is connected to the said attachment plate (2) in order to rotate around an axis (41), which is parallel to the said axis (12) of articulation.
